# EUROPÄISCHE PATENTSCHRIFT

(11) **EP 0 850 898 B1**
(45) Veröffentlichungstag und Bekanntmachung des Hinweises auf die Patenterteilung: **26.04.2000**
(21) Anmeldenummer: 97122392.0
(22) Anmeldetag: 18.12.1997
(51) Int. Cl.: C04B 35/573, F16C 33/04

(54) **Gleitwerkstoff aus Siliciumcarbid**
Silicon carbide sliding material
Matériau de glissage en carbure de silicon

(30) Priorität: 23.12.1996 DE 19654174
(43) Veröffentlichungstag der Anmeldung: 01.07.1998
(73) Patentinhaber: Elektroschmelzwerk Kempten GmbH, D-81737 München (DE)
(72) Erfinder: Greim, Jochen, Dr., 87474 Buchenberg (DE); Thaler, Hubert, 87437 Kempten (DE); Fundus, Michael, 87439 Kempten (DE)
(74) Vertreter: Potten, Holger

(56) Entgegenhaltungen:
- EP-A- 0 685 437
- EP-A- 0 709 352

## Beschreibung

Die Erfindung betrifft einen Gleitwerkstoff aus Siliciumcarbid, ein Verfahren zu seiner Herstellung sowie seine Verwendung.

Dichtes gesintertes SiC zeichnet sich durch hohe Härte, Hochtemperaturfestigkeit, hohe Wärmeleitfähigkeit, Thermoschockbeständigkeit, Oxidationsbeständigkeit, sowie hohen Abrasions- und Korrosionswiderstand aus. Es zeigt auch ein sehr gutes tribologisches Verhalten, worunter das Reibungs- und Verschleißverhalten mit und ohne Schmierung zu verstehen ist. Aus diesem Grunde hat sich gesintertes, reines SiC als nahezu idealer Werkstoff für verschleißbeanspruchte Gleitlager und insbesondere Gleitringdichtungen eingeführt und verdrängt in diesen Anwendungen andere Werkstoffe wie z.B. Aluminiumoxid oder Hartmetall. So werden Gleitringdichtungen und Gleitlager aus gesintertem Siliciumcarbid (SSiC) bereits seit Ende der 70er Jahre in Pumpen, die starken korrosiven und abrasiven Verschleißbeanspruchungen unterliegen, erfolgreich eingesetzt. Dichtes gesintertes SiC besitzt eine Reinheit von ≥ 98,5 Gew.% SiC und weist eine Sinterdichte von typisch 3,10 - 3,16 g/cm³, entsprechend einer Restporosität von 1 - 3 Vol.% auf. Dank seiner hohen Härte (Knoop HK_{0,1} = 2500) und Festigkeit (Biegbruchfestigkeit: ca. 400 MN/m²) ist das gesinterte SiC außergewöhnlich widerstandsfähig gegenüber Verschleiß durch Feststoffpartikel, die in flüssigen Medien mitgeführt werden. Selbst bei einer Kombination von abrasivem und korrosivem Verschleiß ist dieser keramische Werkstoff beständig.

Aufgrund der universellen Korrosionsbeständigkeit, dem außergewöhnlichen Verschleißwiderstand und den guten tribologischen Eigenschaften konnten bisher mit dicht gesintertem SiC (käuflich erhältlich z.B. bei der Firma Elektroschmelzwerk Kempten unter der Bezeichnung EKasic®D) eine Vielzahl von Lager- und Dichtungsproblemen gelöst werden. Dieses Material ist beispielsweise in Proc. 10th Int. Pumps Users Symposium S.63-69 gewinnen, gelang erst mit mediengeschmierten Gleitlagern aus EKasic® D der Durchbruch.

Viele in der Praxis dennoch auftretende Gleitverschleißprobleme sind auf Unterbrechung der idealen, d.h. ordentlich geschmierten Laufbedingungen zurückzuführen. Dabei kommen die Gleitflächen der betreffenden Lager oder Dichtungen miteinander in Kontakt und es entsteht eine Festkörper- oder Trockenreibung, die sich in einer stark erhöhten Steigerung des Reibwertes ausdrückt und zu Temperaturspitzen führt.

Für Anwendungen unter erschwerten hydrodynamischen Bedingungen sind Werkstoffmodifikationen bekannt, die durch geeignete Gestaltung der Funktionsflächen auch bei kurzzeitigem Mischreibungs- und Trockenlauf noch eine ausreichende Stabilisierung des hydrodynamischen Schmierfilms gewährleisten:

Die Firma Elektroschmelzwerk Kempten GmbH (ESK) bietet einen SiC-Werkstoff mit definiert eingebrachten Poren (mittlere Porengröße ca. 40 µm) unter der Bezeichnung EKasic® Tribo 2000 an. Bei diesem Werkstoff wirken die Poren als Mikroschmiertaschen in der Gleitfläche. Bei kurzzeitigem Zusammenbrechen des hydrodynamischen Schmierfilms ist durch sie noch eine Restschmierung möglich.

Weiterhin bietet die Firma ESK einen SiC-Werkstoff mit definiert eingebrachten Poren und Graphitpartikeln (mittlere Korngröße ca. 60 µm) unter der Bezeichnung EKasic® Tribo 2000-1 an. Dieser Werkstoff zeigt ein deutlich verbessertes Laufverhalten in dynamischen Gleitringdichtungen in der Paarung Hart/Hart (SiC gegen SiC), die bei hohen Druckdifferenzen unter Misch- und Grenzreibungsbedingungen laufen.

Werkstoffe mit definiert eingebrachten Poren sind beschrieben in EP-A-685437. Werkstoffe enthaltend grobe Graphitpartikel sind beschrieben in EP 709352.

Obwohl mit den bekannten SiC-Werkstoffmodifikationen für viele Anwendungen im Lager- und Dichtungsbereich eine erfolgreiche Lösung gefunden werden kann, gibt es immer wieder kritische Anwendungsfälle, besonders im Heißwasserbereich, wo es zu Korrosionserscheinungen in den Gleitflächen auch bei gesinterten SiC-Werkstoffen kommen kann.

Anwendungen im Heißwasserbereich sind beispielsweise Gleitringdichtungen in der Paarung Hart/Weich (SiC gegen Graphit) oder in der Paarung Hart/Hart (SiC gegen SiC) für Heizungs- und Kraftwerkspumpen unter folgenden Einsatzbedingungen: Medientemperatur: vorzugsweise 50 bis 200°C, besonders bevorzugt 60°-150°C, Druckdifferenz: vorzugsweise 2 -20 bar, besonders bevorzugt 5-10 bar, Gleitgeschwindigkeit: vorzugsweise 2 bis 20 m/s, besonders bevorzugt < 10 m/s.

Bei hohen Gleitgeschwindigkeiten und ungünstigen Laufbedingungen kann es zum Beispiel in einer Gleitringdichtung zu kurzzeitigem Trockenlauf mit lokalen Temperaturspitzen >200°C in den Gleitflächen kommen. Aufgrund der guten Wärmeleitfähigkeit von SiC werden diese hohen Temperaturen zwar nur kurze Zeit in oberflächennahen Bereichen ("hot spots") erreicht, trotzdem können diese Temperaturspitzen zu Korngrenzenkorrosionserscheinungen bis zu einer Tiefe von ca. 20 µm führen. Bei Vorliegen eines feinkörnigen SiC-Gefüges, worunter ein SiC-Gefüge mit einer Korngröße < 20µm zu verstehen ist, kann es in diesen Bereichen über Kristallitausbrüche im Dichtspalt zu tribochemischen Reaktionen kommen, die dann zu einer SiO₂-Schichtbildung auf den Gleitflächen führen können. Diese, teilweise mit bloßem Auge sichtbaren, weißen Schichten können die Dichtspaltgeometrie bis zum Versagen der Dichtung verändern.

Obwohl dichtes, gesintertes SiC auch mit derartigen Situationen im allgemeinen besser fertig wird als andere Keramiken, besteht ein Bedarf an weiterentwickelten SiC-Gleitwerkstoffen insbesondere für Anwendungen im Heißwasserbereich.

Es stellte sich somit die Aufgabe, die Korrosionsbeständigkeit in wässrigen Medien unter erhöhten thermischen Belastungen zu verbessern.

Diese Aufgabe wird erfindungsgemäß gelöst durch einen Gleitwerkstoff mit einer überwiegend grobkörnigen SiC-Gefügematrix aus drucklos gesintertem SiC mit bimodaler Korngrößenverteilung, dadurch gekennzeichnet, daß die bimodale Korngrößenverteilung gebildet ist durch 50 bis 90 Vol.% prismatische, plättchenförmige SiC-Kristallite einer Länge von 100 bis 1500 µm sowie durch 10 bis 50 Vol.% prismatische, plättchenförmige SiC-Kristallite einer Länge von 5 bis < 100 µm.

Während die herkömmlichen Bemühungen zur Gefügeoptimierung in Richtung homogener Feinkörnigkeit des Gefüges des SiC-Gleitwerkstoffes gehen, ist beim erfindungsgemäßen SiC-Gleitwerkstoff der Anteil der Korngrenzen durch gezielte Gefügevergröberung minimiert. Bei dem erfindungsgemäßen Gleitwerkstoff sind die großen, oberflächennahen SiC-Kristallite tief im nicht durch die Korngrenzenkorrosion beeinflußten Gefüge verankert. Dadurch wird der korrosive Angriff, der insbesondere bei erhöhter thermischer Belastung über die Korngrenzen läuft, reduziert, und verliert durch die tiefe Verankerung (bis ca. 1500 µm) der Einzelkristallite in der Matrix seine gleitflächenschädigende Wirkung. Die Wahrscheinlichkeit von Kornausbrüchen ist somit deutlich reduziert, und es kommt nicht zu einer funktionsgefährdenden Schichtbildung auf den Gleitflächen.

Vorzugsweise ist das bimodale Korngrößenverteilung gebildet durch 60 bis 90 Vol.% aus prismatischen, plättchenförmigen SiC-Kristalliten einer Länge von 100 bis 1500 µm sowie zu 10 bis 40 Vol.% aus prismatischen, plättchenförmigen SiC-Kristallite einer Länge von 5 bis < 100 µm.

Der erfindungsgemäße SiC-Gleitwerkstoff besteht vorzugsweise aus α-SiC. Er enthält vorzugsweise als Sinteradditive bis zu 2 Gew.% Aluminium und/oder Bor. Er kann ferner bis zu 5 Gew.% Kohlenstoff in Form von Ruß und/oder Graphit enthalten. Der Graphit kann in Partikelform vorliegen. In Partikelform hat er vorzugsweise eine Korngröße von etwa 60 µm.

Der erfindungsgemäße Werkstoff kann dicht oder porös mit geschlossener Porosität bis zu 10 Vol.% sein. Bei porösem SiC mit geschlossener Porosität liegt die mittlere Porengröße vorzugsweise bei ca. 40 µm.

Vorzugsweise liegt bei drucklos dicht gesintertem SiC die Restporosität bei 1 - 3 Vol.% und bei porösem SiC mit geschlossener Porosität bei 4 - 6 Vol.%.

Die Herstellung des erfindungsgemäßen SiC-Gleitwerkstoffs kann mittels im Stand der Technik prinzipiell bekannter Verfahren erfolgen.

Für die Herstellung des erfindungsgemäßen SiC-Gleitwerkstoffs wird als SiC-Ausgangspulver vorteilhaft handelsübliches α-SiC mit einer Teilchengrößenverteilung < 5 µm, vorzugsweise < 3 µm und einer spezifischen Oberfläche von 10 - 15 m²/g (gemessen nach BET), und einer Reinheit von mindestens 99,5 Gew.%, bezogen auf die metallischen Verunreinigungen, verwendet.

Zur Herstellung des erfindungsgemäßen Werkstoffes wird das mit den Sinteradditiven dotierte SiC-Ausgangspulver beispielsweise in an sich bekannter Weise zusammen mit bis zu 7 Gew.% an üblichen Preßhilfsmitteln zu einem Schlicker verarbeitet und anschließend in geeigneter Weise, beispielsweise durch Sprühtrocknung des vorgefertigten Schlickers, zu einem freifließenden Granulat verarbeitet. Es können zusätzlich in an sich bekannter Art porenbildende Materialien in üblichen Mengen zugesetzt werden. Diesbezüglich wird beispielsweise auf EP-A-685437, S.5, Z. 9 bis 38 Bezug genommen (incorporated by reference). Es lassen sich auch Graphitpartikel in bekannter Art in üblichen Mengen einbringen. Diesbezüglich wird beispielsweise auf EP 709352 Bezug genommen (incorporated by reference).

Geeignete Sinteradditive sind beispielsweise elementarer Kohlenstoff, elementares Aluminium, elementares Bor, Aluminiumnitrid und Borcarbid, wobei sich besonders elementarer Kohlenstoff in Form von partikulärem Graphit oder Ruß und amorphes Bor bewährt haben.

Geeignete Presshilfsmittel sind beispielsweise Polyvinylalkohol, Polyvinylacetat, Aluminiumstearat, Polyacrylat, Polyether und Zucker. Vorteilhaft wird als Presshilfsmittel Polyvinylalkohol, das unter dem Namen Polyviol bei der Firma Wacker-Chemie GmbH, München, erhältlich ist, zusammen mit Zucker (Saccharose) eingesetzt.

Die preßfertige Mischung wird anschließend unter Formgebung beispielsweise durch axiales Gesenkpressen oder isostatisches Pressen zu Grünkörpern verpreßt. Die gepreßten Formkörper werden einer 10 bis 24-stündigen Wärmebehandlung bei Temperaturen im Bereich zwischen 100° und 1000°C in Gegenwart einer inerten Atmosphäre unterzogen, um die Presshilfsmittel zu entfernen und die eventuell vorhandenen Poren bildenden Zusätze zu pyrolysieren. Anschließend werden die vorerhitzten Formkörper bei einer Sintertemperatur von 2040°C - 2090°C vorzugsweise in Gegenwart einer Schutzgasatmosphäre oder im Vakuum (30-800 mbar) 20 bis 60 min lang auf hohe Dichte (3,14 - 3,19 g/cm³) mit einem feinkörnigen Gefüge gesintert. Anschließend wird unter oben genannten Atmosphärenbedingungen bei einer Kornwachstumstemperatur von 2100°C - 2220°C bis zur Bildung des erfindungsgemäßen SiC-Gleitwerkstoffs 20 - 60 min getempert.

Der erfindungsgemäße SiC-Gleitwerkstoff läßt sich als Dichtring in axialen Gleitringdichtungen in den Paarungen Hart/Hart und Hart/Weich, vorzugsweise in der Paarung Hart/Hart verwenden. Er eignet sich auch zur Herstellung von Wellenschutzhülsen und Bauteilen für Gleitlager deren Verschleißfestigkeit und Zuverlässigkeit unter erhöhten thermischen Belastungen verbessert werden sollen.

Insbesondere eignet sich der erfindungsgemäße Gleitwerkstoff für tribologische Anwendungen in wässrigen Medien unter hoher thermischer Belastung. Solche Anwendungen sind beispielsweise Gleitringdichtungen und Gleitlager in den Paarungen Hart/Hart und Hart/Weich für Chemie- Heizungs- und Kraftwerkspumpen.

Vorzugsweise wird der erfindungsgemäße Gleitwerkstoff eingesetzt in Gleitringdichtungen in der Paarung Hart/Hart für Pumpen, insbesondere Heizungs- und Kraftwerkspumpen, unter Heißwasserbedingungen.

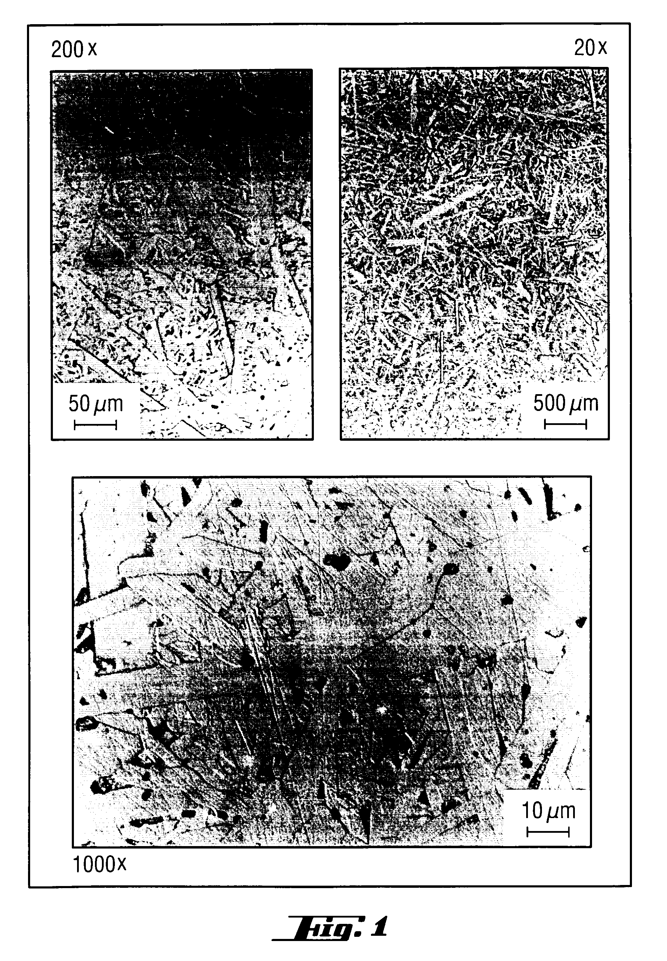

Figur 1 zeigt ein charakteristisches, bimodales Plateletgefüge des erfindungsgemäßen SiC-Gleitwerkstoffes gemäß Beispiel 1 bei 20 facher (rechts oben), 200 facher (links oben) und 1000 facher (unten) Vergrößerung.

Figur 2 zeigt schematisch den Schadensverlauf an einer herkömmlichen SiC-Gleitringdichtung bei erhöhter thermischer Belastung. In Figur 2 ist eine herkömmliche Gleitringdichtung mit Gleit (1) - und Gegenring (2) aus feinkörnigem SiC mit einer Korngröße von 95 Vol.% < 5 µm dargestellt. Die durch Korngrenzenkorrosion (3) bis zu einer max. Tiefe von ca. 20 µm gelockerten Kristallite werden im Einsatz bei erhöhter thermischer Belastung in den Dichtspalt (4) gezwungen und feinst zermahlen. Durch tribochemische Reaktionen kommt es dann zur Bildung von funktionsstörenden SiO₂-Schichten.

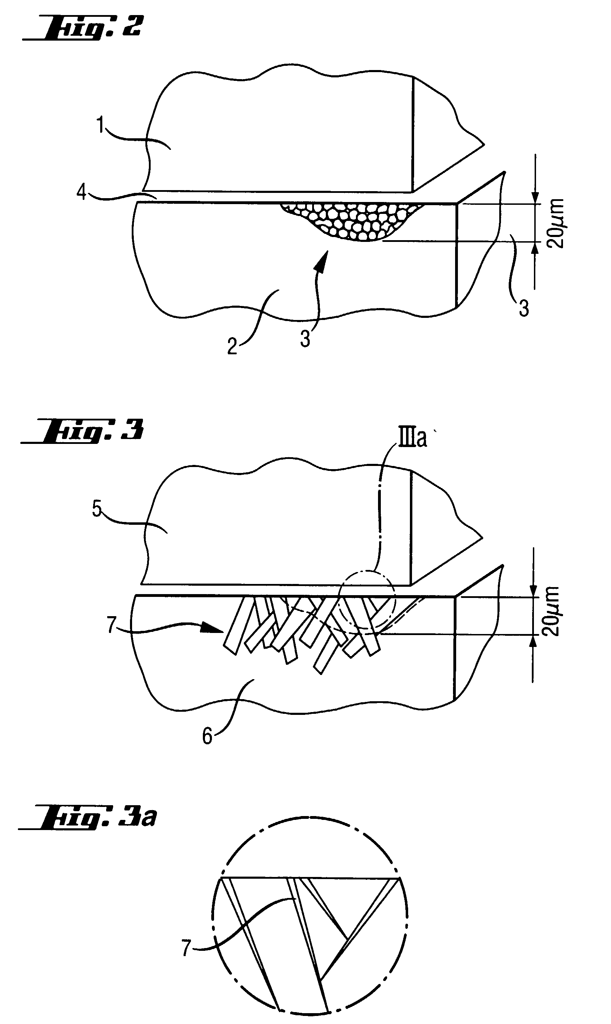

Figur 3, 3a zeigt schematisch wie durch erfindungsgemäßen Werkstoff der herkömliche Schadensverlauf vermieden wird. In Figur 3 ist eine Gleitringdichtung mit Gleit (5)- und Gegenring (6) aus dem erfindungsgemäßen grobkörnigen SiC mit bimodalem Plateletgefüge dargestellt. Durch die tiefe, räumliche Verankerung der SiC-Platten in der Matrix, die in der zweidimensionalen Prinzipskizze nicht dargestellt werden kann, kommt es im Einsatz trotz Korngrenzenkorrosion (7) bis zu einer max. Tiefe von ca. 20 µm zu keinen Kristallitausbrüchen und somit auch zu keinen tribochemischen Reaktionen mit SiO₂-Schichtbildung auf den Gleitflächen. Die in Figur 3a, Ausschnitt IIIa zweidimensional dargestellten Kristallite sind in der Realität dreidimensional über die Korrosionstiefe hinaus in der Matrix verankert.

Figur 4 zeigt die Gleitfläche eines erfindungsgemäßen Gleitrings nach dem Prüfstandslauf von 500 h wie in Beispiel 4 beschrieben.(Vergrößerung 20x)

Figur 5 zeigt einen senkrechten Schnitt durch die Gleitfläche des Gleitrings aus Fig. 4.(Vergrößerung 1000x)

Figur 6 zeigt zeigt die Gleitfläche eines aus dem Stand der Technik bekannten Gleitrings nach dem Prüfstandslauf von 248 h wie in Beispiel 4 beschrieben.(Vergrößerung 1000x)

Figur 7 zeigt die SiO₂-Schichtbildung auf der Gleitfläche eines aus dem Stand der Technik bekannten Gleitrings nach dem Prüfstandslauf von 500 h wie in Beispiel 4 beschrieben. (Vergrößerung 20x)

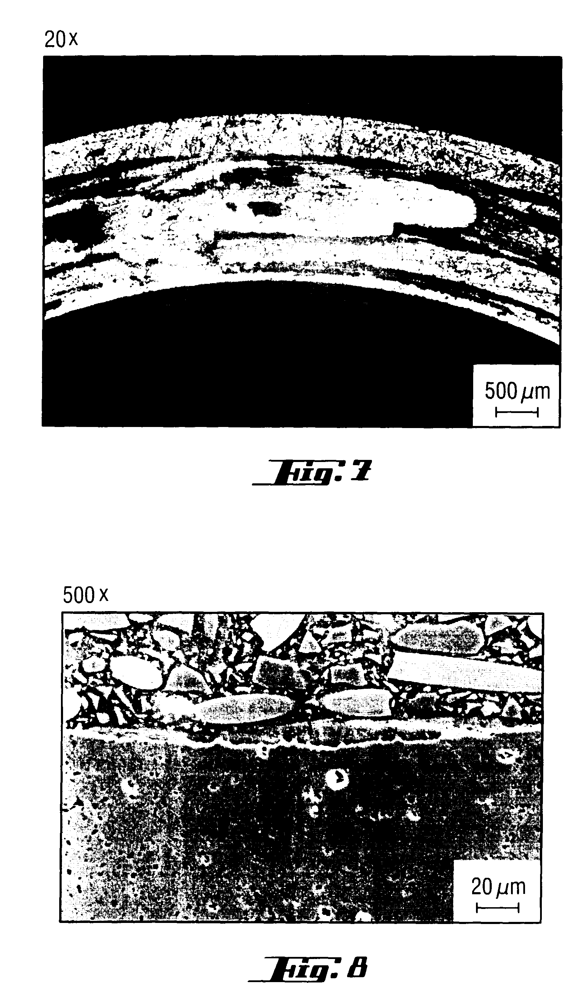

Figur 8 zeigt einen senkrechten Schnitt durch die Gleitfläche des Gleitringes mit der SiO₂ - Schicht aus Fig. 7. (Vergrößerung 500fach)

Fig. 9 zeigt die Gleitfläche eines erfindungsgemäßen Gleitrings mit Graphitpartikeln nach einem Prüfstandslauf von 500 h bei 75 bar wie in Bsp. 5 beschrieben. (Vergrößerung 100fach)

Die folgenden Beispiele dienen zur weiteren Beschreibung der Erfindung:

### Beispiel 1: Herstellung von Gleit und Gegenring aus erfindungsgemäßem Material

Als Ausgangsmaterial wurde feines α-SiC Sinterpulver mit einer mittleren Teilchengröße von 0,6 µm und einer spezifischen Oberfläche von 12 m² pro Gramm verwendet. Der Restsauerstoffgehalt lag bei 0,6 Gew.%. Es wurde ein wäßriger Schlicker nach folgender Rezeptur zubereitet:

| | | |
|---|---|---|
| α-SiC-Sinterpulver | 99,6 | Gewichtsteile (GT) |
| Bor-Zusatz | 0,4 | GT |
| | 100,0 | GT |

| Preßhilfsmittel: | | |
|---|---|---|
| Zucker | 3,5 | GT |
| Polyviol | 2,0 | GT |

Zunächst wurde unter Rühren eine 60%ige Dispersion des SiC-Pulvers in Wasser hergestellt, in dem zuvor die Dotierungs- und Preßhilfsmittel dispergiert bzw. gelöst worden waren. Es wurde durch Wasserzugabe ein Litergewicht von 1600 g/l eingestellt und der so fertig aufbereitete Schlicker über einen Sprühtrockner unter Standardbedingungen getrocknet.

Das erhaltene rieselfähige Preßgranulat wurde schließlich durch Gesenkpressen in einem Trockenpreßautomat unter einem Druck von 100 MPa zu Gleit- und Gegenringenringen der Preßdichte 1,84 g/cm³ mit den ungefähren Abmessungen dₐ = 88, dᵢ = 66, h = 28 mm verarbeitet. Hierauf wurden die Preßteile in einem Verkokungsofen 24 Stunden zur schonenden Entfernung der Gleit- und Bindemittel sowie zur langsamen Pyrolyse der organischen Rußbildner unter strömendem Argonschutzgas auf 800°C vorerhitzt.

Die auf Raumtemperatur abgekühlten entbinderten Gleitringe wurden anschließend in Graphittiegeln, die in der Heizzone eines Graphitrohrofens eingesetzt waren 30 min bei 2080°C und einem Unterdruck von 600 mbar auf eine Dichte von 3,17 g/cm³ gesintert. Anschließend erfolgte eine Temperphase bei einer Kornwachstumstemperatur von 2155°C und einer Haltezeit von 40 min unter Argon. Die Sinterkörper erfuhren eine 18%ige lineare Schrumpfung bezogen auf den Durchmesser der Ringe und zeigten eine Sinterdichte von durchschnittlich 3,17 g/cm³, entsprechend einer Gesamtporosität von 1,0 Vol.-%.

### Beispiel 2: Herstellung weiterer Gleit- und Gegenring aus erfindungsgemäßem Material

Als Ausgangsmaterial wurde feines α-SiC Sinterpulver mit einer mittleren Teilchengröße von 0,6 µm und einer spezifischen Oberfläche von 12 m² pro Gramm verwendet. Der Restsauerstoffgehalt lag bei 0,6 Gew.%. Es wurde ein wäßriger Schlicker nach folgender Rezeptur zubereitet:

| | | |
|---|---|---|
| a-SiC-Sinterpulver | 99,0 | Gewichtsteile (GT) |
| Bor-Zusatz | 0,5 | GT |
| Ruß-Agglomerate (45 - 80 µm) | 0,5 | GT |
| | 100,0 | GT |

| Preßhilfsmittel: | | |
|---|---|---|
| Zucker | 3,5 | GT |
| Polyviol | 2,0 | GT |

Zunächst wurde unter Rühren eine 60%ige Dispersion des SiC-Pulvers in Wasser hergestellt, in dem zuvor die Dotierungs- und Preßhilfsmittel dispergiert bzw. gelöst worden waren. Es wurde durch Wasserzugabe ein Litergewicht von 1600 g/l eingestellt und der so fertig aufbereitete Schlicker über einen Sprühtrockner unter Standardbedingungen getrocknet.

Das erhaltene rieselfähige Preßgranulat wurde schließlich durch Gesenkpressen in einem Trockenpreßautomat unter einem Druck von 100 MPa zu Gleit- und Gegenringenringen der Preßdichte 1,79 g/cm³ mit den ungefähren Abmessungen dₐ = 88, dᵢ = 66, h = 28 mm verarbeitet. Hierauf wurden die Preßteile in einem Verkokungsofen 24 Stunden zur schonenden Entfernung der Gleit- und Bindemittel sowie zur langsamen Pyrolyse der organischen Rußbildner unter strömendem Argonschutzgas auf 800°C vorerhitzt.

Die auf Raumtemperatur abgekühlten entbinderten Gleitringe wurden anschließend in Graphittiegeln, die in der Heizzone eines Graphitrohrofens eingesetzt waren, unter gleichen Sinter- und Temperbedingungen wie in Beispiel 1 gesintert. Die Sinterkörper erfuhren eine 18%ige lineare Schrumpfung bezogen auf den Durchmesser der Ringe und zeigten eine Sinterdichte von durchschnittlich 3,14 g/cm³, entsprechend einer Gesamtporosität von 1,5 Vol.%.

### Beispiel 3: Herstellung von Gleit- und Gegenringen aus herkömmlichem, feinkörnigem SiC

Als Ausgangsmaterial wurde feines α-SiC Sinterpulver mit einer mittleren Teilchengröße von 0,6 µm und einer spezifischen Oberfläche von 12 m² pro Gramm verwendet. Der Restsauerstoffgehalt lag bei 0,6 Gew.%. Es wurde ein wäßriger Schlicker nach folgender Rezeptur zubereitet:

| | | |
|---|---|---|
| α-SiC-Sinterpulver | 98,5 | Gewichtsteile (GT) |
| Bor-Zusatz | 0,5 | GT |
| Ruß | 1,0 | GT |
| | 100,0 | GT |

| Preßhilfsmittel: | | |
|---|---|---|
| Zucker | 3,0 | GT |
| Polyviol | 2,0 | GT |

Zunächst wurde unter Rühren eine 60%ige Dispersion des SiC-Pulvers in Wasser hergestellt, in dem zuvor die Dotierungs- und Preßhilfsmittel dispergiert bzw. gelöst worden waren. Es wurde durch Wasserzugabe ein Litergewicht von 1600 g/l eingestellt und der so fertig aufbereitete Schlicker über einen Sprühtrockner unter Standardbedingungen getrocknet.

Das erhaltene rieselfähige Preßgranulat wurde schließlich durch Gesenkpressen in einem Trockenpreßautomat unter einem Druck von 100 MPa zu Gleit- und Gegenringenringen der Preßdichte 1,82 g/cm³ mit den ungefähren Abmessungen dₐ = 88, dᵢ = 66, h = 28 mm verarbeitet. Hierauf wurden die Preßteile in einem Verkokungsofen 24 Stunden zur schonenden Entfernung der Gleit- und Bindemittel sowie zur langsamen Pyrolyse der organischen Rußbildner unter strömendem Argonschutzgas auf 800°C vorerhitzt.

Die auf Raumtemperatur abgekühlten entbinderten Gleitringe wurden anschließend in Graphittiegeln, die in der Heizzone eines Graphitrohrofens eingesetzt waren, 30 min bei 2030°C und einem Unterdruck von 600 mbar gesintert. Die Sinterkörper erfuhren eine 17,5%ige lineare Schrumpfung bezogen auf den Durchmesser der Ringe und zeigten eine Sinterdichte von durchschnittlich 3,15 g/cm³, entsprechend einer Gesamtporosität von 1,3 Vol.-%.

### Beispiel 4: Ergebnisse der Gleitring-Prüfstandstests

Die Gleitringe aus Beispiel lund 3 wurden in üblicher Weise mit losem Diamantkorn <20µm auf die erforderlichen Endabmessungen plangeläppt und als Testringe verwendet. Die Versuche wurden an einem Gleitringdichtungsprüfstand (Fa. Burgmann) unter folgenden Bedingungen durchgeführt:
Druckdifferenz: 6 bar
Gleitgeschwindigkeit: 8 m/s
Laufzeit: 500 Std.
Mediumstemperatur: VE-Wasser 60°C

Die Beurteilung der Auswirkungen der Korngrenzenkorrosion wurde auf keramographischem Weg mit Hilfe der Lichtmikroskopie durchgeführt.

### Beurteilung des erfindungemäßen Gleitrings gemäß Beispiel 1:

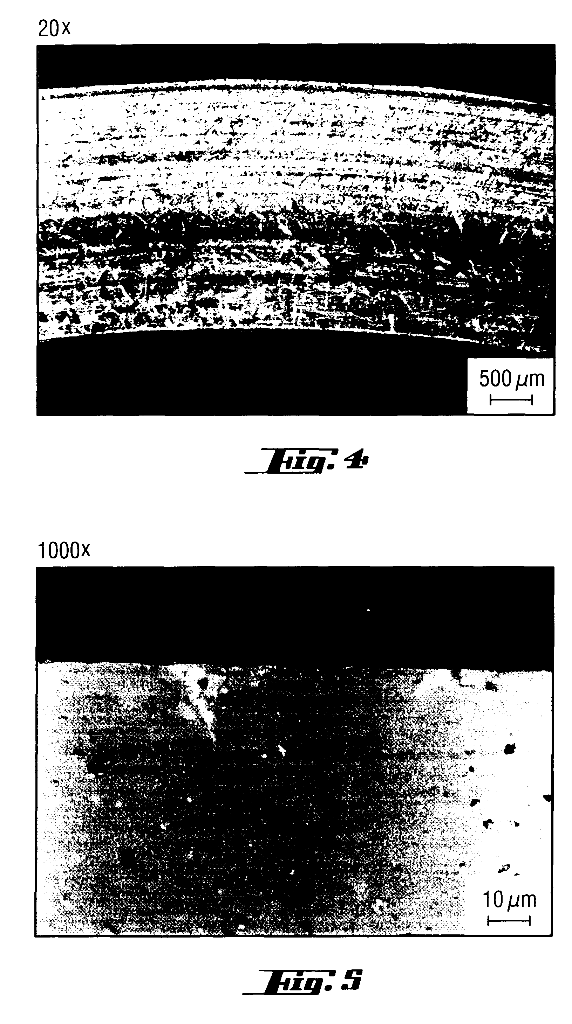

Wie Figur 4 zeigt, ist die grobkörnige Plateletstruktur auch in der Gleitfläche nach dem Prüfstandslauf deutlich zu erkennen. Obwohl, wie in Figur 5 (senkrechter Schnitt durch die Gleitfläche) dargestellt, eine Korrosion entlang der Korngrenzen stattfand, wurden aufgrund der tiefen Verankerung der SiC-Platten in der Matrix keine Einzelkristallite herausgebrochen und somit hat keine SiO₂-Schichtbildung auf der Gleitfläche stattfinden können (vgl. schematische Darstellung Figur 3).

### Beurteilung des herkömmlichen, feinkörnigen SiC-Gleitwerkstoffs gemäß Beispiel 3

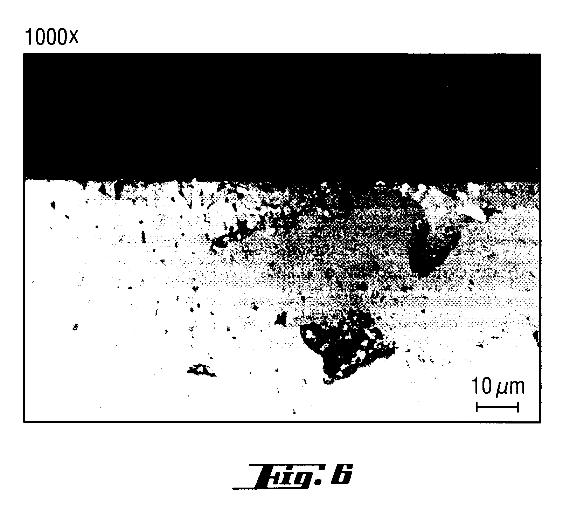

Figur 6 zeigt im höchstbelasteten Umfangsbereich der Gleitfläche nach 248 h Laufzeit eine Korngrenzenkorrosions bis ca. 20 µm Tiefe. Sie umfaßt aufgrund des feinkörnigen Gefüges mehrere Kornlagen und führte somit zu einer großflächigen Gefügelockerung (vgl. schematische Darstellung Figur 2). Die oberflächennahen, gelockerten Einzelkristallite wurden unter Belastung in den Dichtspalt gezwungen und unter tribochemischer Reaktion zu Si-O-OH zermahlen. Nach 500 h Laufzeit kommt es, wie in Figur 7 ersichtlich zu einer SiO₂-Schichtbildung auf der Gleitfläche, die zum Versagen der Dichtung führte.

### Beispiel 5: Ergebnis eines weiteren Gleitring-Prüfstandstests

Die Gleitringe aus Beispiel 2 wurden in üblicher Weise mit losem Diamantkorn < 20 µm auf die erforderlichen Endabmessungen plangeläppt und als Testringe verwendet. Die Versuche wurden an einem Gleitringdichtungsprüfstand (Fa. Burgmann) unter folgenden Bedingungen durchgeführt:
Druckdifferenz: 75 bar
Gleitgeschwindigkeit: 8 m/s
Laufzeit: 500 Std.
Mediumstemperatur: VE-Wasser 60°C

Die Berurteilung der Auswirkungen der Korngrenzenkorrosion wurde auf keramographischem Weg mit Hilfe der Lichtmikroskopie durchgeführt.

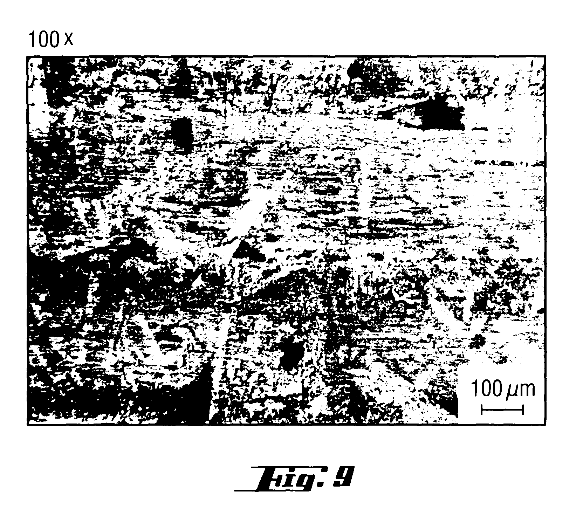

Beurteilung des erfindungsgemäßen Gleitrings gemäß Beispiel 2: Wie Fig. 9 zeigt, ist die grobkörnige Plateletstruktur mit Graphitpartikeln der Größe 45 - 80 µm auch in der Gleitfläche nach dem Prüfstandslauf deutlich zu erkennen. Auch in diesem Fall hat keine SiO₂-Schichtbildung auf der Gleitfläche stattgefunden.

Die Ergebnisse belegen die Wirksamkeit der erfindungsgemäßen Gefügevergröberung des neuen, bimodalen SiC-Gleitwerkstoffes mit Plateletgefüge im Vergleich zum herkömmlichen, feinkörnigen SiC-Gleitwerkstoff.

## Patentansprüche

1. Gleitwerkstoff mit einer überwiegend grobkörnigen SiC-Gefügematrix aus drucklos gesintertem SiC mit bimodaler Korngrößenverteilung, dadurch gekennzeichnet, daß die bimodale Korngrößenverteilung gebildet ist durch 50 bis 90 Vol.% prismatische, plättchenförmige SiC-Kristallite einer Länge von 100 bis 1500 µm sowie durch 10 bis 50 Vol.% prismatische, plättchenförmige SiC-Kristallite einer Länge von 5 bis < 100 µm.

2. SiC-Gleitwerkstoff gemäß Anspruch 1, dadurch gekennzeichnet, daß die bimodale Korngrößenverteilung gebildet ist durch 60 bis 90 Vol.% prismatische plättchenförmige SiC-Kristallite einer Länge von 100 bis 1500 µm sowie durch 10 bis 40 Vol.% prismatische, plättchenförmige SiC-Kristallite einer Länge von 5 bis < 100 µm.

3. SiC-Gleitwerkstoff gemäß Anspruch 1 oder 2, dadurch gekennzeichnet, daß die SiC-Kristallite aus α-Siliciumcarbid sowie aus bis zu 2 Gew.% (Summe) Aluminium und/oder Bor bestehen.

4. SiC-Gleitwerkstoff gemäß einem der Ansprüche 1 bis 3, dadurch gekennzeichnet, daß er bis zu 5 Gew.% Kohlenstoff in Form von Ruß und/oder Graphit enthält.

5. SiC-Gleitwerkstoff gemäß einem der Ansprüche 1 bis 4, dadurch gekennzeichnet, daß er definiert eingebrachte Poren und/oder Graphitpartikel enthält.

6. Verfahren zur Herstellung eines Gleitwerkstoffs gemäß einem der Ansprüche 1 bis 5, dadurch gekennzeichnet, daß ein mit Sinteradditiven und Preßhilfsmitteln sowie ggf. Porenbildnern versetztes, feinteiliges α-SiC-Pulver unter Formgebung zu Grünkörpern verpreßt, die Grünkörper in Gegenwart einer Schutzgasatmosphäre bei Temperaturen bis 1000°C vorerhitzt und die vorerhitzten Grünkörper anschließend bei Temperaturen von 2040°C bis 2090°C bis zur Bildung von Sinterkörpern einer Dichte von 90% bis 99% der Reindichte des Siliciumcarbids gesintert werden, und anschließend bei einer Kornwachstumstemperatur von 2100°-2220°C 20-60 min getempert werden.

7. Verfahren nach Anspruch 6, dadurch gekennzeichnet, daß als Sinteradditive Aluminiumnitrid und/oder Bor in Mengen bis zu 2 Gew.% verwendet werden.

8. Verfahren nach einem der Ansprüche 6 oder 7, dadurch gekennzeichnet, daß die Sinterung der vorerhitzten Grünkörper in Gegenwart einer inerten Atmosphäre bei einem absoluten Druck von ≥ 30 mbar durchgeführt wird.

9. Verwendung des SiC-Gleitwerkstoffs gemäß einem oder mehreren der Ansprüche 1 bis 5 als Dichtring in axialen Gleitringdichtungen in Heißwasseranwendungen in der Paarung gegen sich selbst.

## Claims

1. Bearing material having a predominantly coarse-grained SiC matrix of pressureless sintered SiC having a bimodal grain size distribution, characterized in that the bimodal grain size distribution is formed by from 50 to 90% by volume of prismatic, tabular SiC crystallites having a length of from 100 to 1500 µm and from 10 to 50% by volume of prismatic, tabular SiC crystallites having a length of from 5 to < 100 µm.

2. SiC bearing material according to Claim 1, characterized in that the bimodal grain size distribution is formed by from 60 to 90% by volume of prismatic tabular SiC crystallites having a length of from 100 to 1500 µm and from 10 to 40% by volume of prismatic, tabular SiC crystallites having a length of from 5 to < 100 µm.

3. SiC bearing material according to Claim 1 or 2, characterized in that the SiC crystallites comprise α-silicon carbide and up to 2% by weight (total) of aluminium and/or boron.

4. SiC bearing material according to any of Claims 1 to 3, characterized in that it contains up to 5% by weight of carbon in the form of carbon black and/or graphite.

5. SiC bearing material according to any of Claims 1 to 4, characterized in that it contains specifically introduced pores and/or graphite particles.

6. Process for producing a bearing material according to any of Claims 1 to 5, characterized in that a finely divided α-SiC powder admixed with sintering aids and pressing aids plus, if desired, pore formers is shaped by pressing to form green bodies, the green bodies are preheated at temperatures up to 1000°C in the presence of a protective gas atmosphere and the preheated green bodies are subsequently sintered at temperatures of from 2040°C to 2090°C until sintered bodies having a density of from 90% to 99% of the theoretical density of silicon carbide are formed, and the sintered bodies at a grain growth temperature of 2100°-2220°C are subsequently heat treated for 20-60 minutes.

7. Process according to Claim 6, characterized in that sintering aids used are aluminium nitride and/or boron in amounts of up to 2% by weight.

8. Process according to either Claim 6 or 7, characterized in that the sintering of the preheated green bodies is carried out at an absolute pressure of ≥ 30 mbar in the presence of an inert atmosphere.

9. Use of an SiC bearing material according to one or more of Claims 1 to 5 as sealing rings in axial rotating mechanical seals in hot water applications in the pairing against itself.

## Revendications

1. Matériau de glissement avec une matrice de structure en SiC principalement à gros grain, de SiC fritté sans pression avec une répartition bimodale de grosseur de grain, caractérisé en ce que la répartition bimodale de grosseur de grain est formée de 50 à 90% en volume de cristallites en SiC prismatiques lamelliformes, d'une longueur de 100 à 1500 µm, ainsi que de 10 à 50% en volume de cristallites en SiC prismatiques lamelliformes d'une longueur de 5 à <100 µm.

2. Matériau de glissement en SiC suivant la revendication 1, caractérisé en ce que la répartition bimodale de grosseur de grain est formée de 60 à 90% en volume de cristallites en SiC prismatiques lamelliformes d'une longueur de 100 à 1500 µm, ainsi que de 10 à 40% en volume de cristallites en SiC prismatiques lamelliformes d'une longueur de 5 à <100 µm.

3. Matériau de glissement en SiC suivant la revendication 1 ou 2, caractérisé en ce que les cristallites en SiC sont constituées d'α-carbure de silicium, ainsi que jusqu'à 2% en poids (somme) d'aluminium et/ou de bore.

4. Matériau de glissement en SiC suivant l'une des revendications 1 à 3, caractérisé en ce qu'il contient jusqu'à 5% en poids de carbone sous forme de noir de carbone et/ou de graphite.

5. Matériau de glissement en SiC suivant l'une des revendications 1 à 4, caractérisé en ce qu'il contient des pores introduits de manière définie et/ou des particules de graphite.

6. Procédé de préparation d'un matériau de glissement suivant l'une des revendications 1 à 5, caractérisé en ce qu'une poudre d'α-SiC finement divisée mélangée avec des additifs de frittage et des auxiliaires de pressage, ainsi que le cas échéant, des agents porogènes, est comprimée par moulage en corps verts, les corps verts sont préchauffés à des températures jusqu'à 1000°C en présence d'une atmosphère de gaz protecteur et les corps verts préchauffés sont ensuite frittés à des températures de 2040°C à 2090°C jusqu'à la formation de corps frittés d'une densité de 90% à 99% de la densité réelle du carbure de silicium, et enfin sont recuits pendant 20 - 60 minutes à une température de croissance de grain de 2100°-2220°C.

7. Procédé suivant la revendication 6, caractérisé en ce qu'on utilise comme additifs de frittage du nitrure d'aluminium et/ou de bore en des quantités de jusqu'à 2% en poids.

8. Procédé suivant l'une des revendications 6 ou 7, caractérisé en ce que le frittage des corps verts préchauffés s'effectue en présence d'une atmosphère inerte à une pression absolue de ≥30 mbars.

9. Utilisation du matériau de glissement en SiC suivant une ou plusieurs des revendications 1 à 5, comme bague d'étanchéité dans des garnitures d'étanchéité axiale dans des applications en eau chaude, en appariement avec lui-même.
